# EUROPÄISCHE PATENTSCHRIFT

(11) **EP 1 151 029 B1**
(45) Veröffentlichungstag und Bekanntmachung des Hinweises auf die Patenterteilung: **09.04.2003**
(21) Anmeldenummer: 99901586.0
(22) Anmeldetag: 05.01.1999
(51) Int. Cl.: C08G 73/02, D21H 21/20

(54) **NASSFESTMITTEL MIT NIEDRIGEM DCP-GEHALT**
WET-STRENGTH AGENT WITH LOW DCP CONTENT
AGENT RESISTANT A L'ETAT HUMIDE A FAIBLE TENEUR EN DCP

(43) Veröffentlichungstag der Anmeldung: 07.11.2001
(73) Patentinhaber: Bayer Aktiengesellschaft, 51368 Leverkusen (DE)
(72) Erfinder: GASSEN, Karl-Rudolf, D-40882 Ratingen (DE); KÖNIG, Joachim, D-51519 Odenthal (DE); MEISEL, Karlheinrich, D-51519 Odenthal (DE); PUCHNER, Fritz, D-50996 Köln (DE); REINERS, Jürgen, D-51373 Leverkusen (DE); ZWICK, Horst, D-41539 Dormagen (DE)
(86) Internationale Anmeldenummer: EP9900015
(87) Internationale Veröffentlichungsnummer: WO00040639

(56) Entgegenhaltungen:
- EP-A- 0 776 923
- DE-A- 19 728 789
- US-A- 4 737 576
- US-A- 5 516 885
- US-A- 5 714 552

## Beschreibung

Die vorliegende Erfindung betrifft ein neues Verfahren zur Herstellung von Polykondensat-Lösungen auf Basis von Polyamidamin/Epichlorhydrin-Harzen mit einem Gehalt an 1,3-Dichlor-2-propanol von < 0,1 %.

Umsetzungsprodukte von Polyamidaminen und/oder Polyaminen mit Epichlorhydrin werden seit langem zur Naßverfestigung von Papier eingesetzt.

Die Produkte weisen einen Gehalt an organischen Chlorverbindungen auf, die zu einem Teil polymergebunden sind, zum anderen Teil aus niedermolekularen Nebenkomponenten bestehen, die durch unerwünschte Nebenreaktionen des Epichlorhydrins mit Wasser und Chloridionen bevorzugt im sauren Bereich gebildet werden, z.B. 1,3-Dichlor-2-propanol (DCP) und 1-Chlor-2,3-propandiol (CPD).

Diese niedermolekularen Komponenten, die bei der Herstellung naßfester Papiere z.T. nur wenig von der Cellulosefaser adsorbiert werden, gelangen letztendlich in das Abwasser der Papierfabrik, wo sie als AOX (adsorbierbarer organischer Halogengehalt) erfaßt werden (DIN 38409). In den letzten Jahren wurden entsprechend der AOX-Belastung Abgaben von den Behörden erhoben bzw. auch einzuhaltende Grenzwerte für die AOX-Belastung des Abwassers festgesetzt, so daß für Epichlorhydrin-Harze als Verursacher der AOX-Belastung eine Reduzierung der AOX-Belastung gefordert wurde.

Es sind bereits zahlreiche Lösungsvorschläge zur Verminderung des organischen Chlorgehaltes der Polykondensate bekannt.

US-A-5,714,552 offenbart ein Verfahren zur Herstellung von einem wasserlöslichen Naßverfestigungsharz auf Basis von Epichlorhydrin umfassend die Umsetzung von Epichlorhydrin mit einer Polyamidaminlösung, wobei in einem ersten Schritt Epichlorhydrin mit Polyamidamin in einer Mischung bei einer Temperatur von 25° bis 40°C umgesetzt und in einem zweiten Schritt diese Mischung auf eine Temperatur von 45° bis 85°C erhitzt wird, wobei das molare Verhältnis von Epichlorhydrin zu den Amingruppen von dem Polyamidamin 0.5 bis 1 beträgt und die Lösung 30 bis 100 Gew.-% von Polyamidamin und 0 bis 70 Gew.-% von Wasser enthält. Sobald die gewünschte Viskosität erreicht wird, wird Wasser bis zu dem gewünschten Feststoffgehalt zugegeben und das Produkt durch die Zuführung von genügend Säure bei einem pH von 2.5-3.5 stabilisiert. Geeignete Säuren sind Ameisensäure und Schwefelsäure. Das erzielte Polyamidamin-Epichlohydrin-Harz enthält weniger als 2000 ppm, vorzugsweise weniger als 1000 ppm, 1,3-Dichlor-2-propanol (Ansprüche 1 und 69; Abspalt 5, Zeilen 17-24).

So wird z.B. in den europäischen Patentanmeldungen EP-A 282 862 und EP-A 332 967 eine Nachbehandlung des Polykondensats mit einer Base und in EP-A 512 423 mit einer anorganischen Base und einem organischen Mono-oder Polyamin oder mit Ammoniak durchgeführt.

EP-A 0 349 935 beschreibt Polykondensate die als Aminkomponente Polyamine und Alkanolamine enthalten, und die ebenfalls einer Basennachbehandlung zur Reduzierung des organischen Chlorgehaltes unterzogen werden.

In diesen Verfahren gelingt zwar eine deutliche Reduzierung des organischen Chlorgehaltes. Sie sind jedoch alle sehr aufwendig, da eine mehrmalige Änderung des pH-Wertes erforderlich ist, in allen Fällen die abschließende Zugabe von Säure erforderlich ist, die das Polykondensat im sauren pH-Bereich stabilisieren soll. Es ergibt sich so ein relativ hoher Elektrolytgehalt der Handelsware, der sich negativ auf die Lagerstabilität auswirkt und Korrosionsprobleme bei der Anwendung verursachen kann. Wenn eine ausreichend hohe Naßverfestigung von Papier gefordert wird, ist es bei diesem Verfahren außerdem erforderlich, relativ hohe Mengen von ≥ 1,0 Mol Epichlorhydrin pro Basen-Stickstoff einzusetzen. Es ist zwar möglich, auch mit geringeren Anteilen an Epichlorhydrin zu arbeiten, man muß dann aber einen deutlichen Verlust an Naßfestwirkung in Kauf nehmen.

Da von Produkten mit hohem DCP-Gehalt ein gesundheitliches Risiko ausgehen kann, wurde in Deutschland eine Kennzeichnung von Handelsprodukten auf Basis von Epichlorhydrin-Harzen verlangt, wenn der DCP-Gehalt einen Wert von 0,1% überschreitet. Aus diesem Grund mußten die Hersteller von Naßfestmitteln auf Epichlorhydrin-Basis zusätzliche hohe Anstrengungen unternehmen, um diese Grenzwerte zu unterschreiten, die Auflagen zu vermeiden und das Produkt toxikologisch unbedenklich einzustellen.

EP 469 891 beschreibt z.B. ein Verfahren zur Umsetzung von Polyamidamin mit Epichlorhydrin bei Temperaturen nicht über 60°C bis zu einem Umsatz von 70-100%, Zugabe einer Säure und Weiterreaktion, wobei eine Reduktion des organisch gebundenen Chlor um mindestens 10% erreicht wird. Die Säure wird hier bereits während der Kondensation zugegeben, sie hat die Aufgabe, die Geschwindigkeit der Kondensation im Endstadium zu vermindern.

Weiterhin sind Verfahren bekannt, vgl. z.B. EP-A 488 767, EP-A 717 146, EP-A 374 938, US 5 239 047 und US 5 364 927, die darauf abzielen, durch spezielle Reaktionsführung und Verminderung der eingesetzten Molmenge an Epichlorhydrin pro Mol Basenstickstoff den Gehalt an organischem Chlor und DCP im Polykondensat zu verringern.

EP-A 540 943 beschreibt ein Verfahren zur Herstellung von Polykondensaten durch Umsetzung von Polyamidamin und/oder Polyamin mit Epichlorhydrin, wobei vor und gegebenenfalls auch während der partiellen Vernetzung ein inertes Gas durch die Reaktionsmischung geleitet wird.

EP-A 320121 beschreibt ein Verfahren zur Stabilisierung von wäßrigen, mind.15%igen Lösungen eines Polyamid-Epichlorhydrin-Harzes gegen Gelierung und Viskositätsabbau, wobei zu der genannten Harzlösung eine wäßrige Mischung aus einer schwachen und einer starken Säure in Mengen von 0,6 bis 1,2 mMol Protonen pro g Festharz gegeben wird. Das Molverhältnis der schwachen zur starken Säure beträgt 0,5 bis 10 , bevorzugt 2,0 bis 4,0 und besonders bevorzugt 3,0 bis 3,1 (bez.auf Protonen). Der pH-Wert wird bei diesem Verfahren allgemein auf 3 bis 4,2, bevorzugt auf 3,2 bis 3,4 eingestellt. Dieses Verfahren wird bevorzugt angewendet auf Harze, die durch Anlagerung von 1,0 bis 1,7 Mol Epi pro sekundären Amino-N des Polyamids bei Temperaturen von 45 bis 70°C hergestellt werden. Bei niedrigeren Epi-Anteilen ist mit einem Verlust an Wirksamkeit zu rechnen, bei höherem Epi-Anteil werden Stabilitätsprobleme vorausgesehen. Über den Gehalt an DCP werden keine Angaben gemacht.

Wie die als Stand der Technik aufgeführten zahlreichen Zitate zeigen, wurden in der Vergangenheit vielfältige Versuche unternommen, Polyamidamin/Epichlorhydrin-Harze optimal einzustellen. Die Zielgrößen einwandfreies ökologisches Verhalten durch einen niedrigen Gehalt an organischen Chlorverbindungen (AOX-, DCP, CPD), hohe Naßverfestigung und gute Lagerstabilität bei einem auch ökonomisch günstigen Herstellverfahren ohne komplizierte Zusatzschritte konnten nicht gleichzeitig erreicht werden, da sie teilweise sich widersprechende Maßnahmen beim Herstellverfahren erfordern.

Besonders auch eine ausreichende Lagerstabilität blieb in vielen Fällen ein Problem, das sich üblicherweise nach kurzer Lagerzeit in Abhängigkeit vom Herstellverfahren und der Einstellung sowie den Lagerbedingungen in einer unerwünschten Veränderung der physikalischen Daten z.B. in einem Anstieg des pH-Wertes, einem Anstieg oder Abfall der Viskosität, einer zunehmenden Verfärbung und einem Verlust an Wirksamkeit äußert.

So bestand weiterhin die Aufgabe, ein verbessertes einfaches Verfahren zur Herstellung von Polykondensat-Lösungen mit einem sehr niedrigen Gehalt an organischen Chlorverbindungen, insbesondere an 1.3-Dichlor-2-propanol, hoher Naßfestwirkung und guter Lagerstabilität bereitzustellen.

Das erfindungsgemäße Verfahren löst diese Aufgabe indem es die Herstellung von Polykondensat-Lösungen auf Basis Polyamidamin/Epichlorhydrin-Harzen mit einem sehr niedrigen Gehalt an organischen Chlorverbindungen insbesondere an 1.3-Dichlor-2-propanol, insbesondere einem Gehalt an 1,3-Dichlor-2-propanol von < 0,1 %, hoher Wirksamkeit und guter Lagerstabilität ermöglicht. Das vorliegende Verfahren zur Herstellung von Polykondensat-Lösungen ist gekennzeichnet durch
a) Umsetzung von a1) mindestens einem basischen Polyamidamin und/oder mindestens einem Polyamin in Form einer 10-50 %igen Lösung, mit a2) Epichlorhydrin bei 10-25°C, wobei das Molverhältnis Epichlorhydrin zu Basen-N in a1) 0,5 bis 0,85 beträgt;
b) anschließende Weiterreaktion bei 10-25°C bis zu einem Umsatz des Epichlorhydrins von maximal 90 - 99%;
c) anschließende Umsetzung des Produktes aus b) mit weiterer Lösung a1) zur Vervollständigung der Epi-Umsetzung in einem molaren Verhältnis des in Lösung a1) enthaltenen Basen-N zu Epichlorhydrin von 1:1 bis 1,2:1, wobei der pH-Wert über 6 gehalten wird;
d) Erwärmen auf 30-70°C, bis die Viskosität einer 15 %igen Lösung 30-100 mPas bei 25°C beträgt, und
e) Umsetzung des Produktes aus d) mit Ameisensäure und/oder Schwefelsäure, wobei der pH-Wert auf 2,0 bis 3,0 eingestellt wird.

Das erfindungsgemäße Verfahren zeichnet sich durch technisch einfache Bedingungen aus und erfordert keine aufwendigen Zusatzschritte wie viele der oben beschriebenen Verfahren. Überraschenderweise haben die nach diesem Verfahren hergestellten Polykondensate dennoch sowohl einen sehr niedrigen DCP-Gehalt <0,1%, als auch eine gegenüber bekannten Verfahren verbesserte Naßfestwirkung sowie eine verbesserte Lagerstabilität.

Das unter a1) genannte Polyamidamin wird hergestellt durch Umsetzung einer aliphatischen Dicarbonsäure mit einem Polyalkylenpolyamin in einem molaren Verhältnis von 1,0:1 bis 1:1,2.

In Frage kommen Polyalkylenpolyamine, die mindestens zwei zur Amidbildung befähigte Aminogruppen sowie mindestens eine weitere sekundäre oder tertiäre Aminogruppe enthalten. Besonders geeignete Polyamine sind Diethylentriamin, Triethylentetramin, Tetraethylenpentamin, Pentaethylenhexamin usw. sowie N-Methyl-bis-(aminopropyl)amin, Bis-hexamethylentriamin, N-Aminoethylpiperazin oder Bisaminoethylpiperazin. Daneben können in geringer Menge auch Diamine wie Ethylendiamin, Diaminopropan, 1,6-Diaminohexan mitverwendet werden. Besonders bevorzugt als Polyalkylenpolyamin ist Diethylentriamin.

Als aliphatische Dicarbonsäure kommen in Frage gesättigte Dicarbonsäuren mit 2 bis 12 C-Atomen oder deren funktionelle Derivate wie Anhydride, Ester oder Halbester. Beispiele sind Malonsäure, Bernsteinsäure, Glutarsäure, Adipinsäure und Sebacinsäure, ihre Dimethyl- oder Diethylester sowie auch entsprechende Gemische. Besonders bevorzugt ist Adipinsäure. Möglich ist auch die Mitverwendung von 3-6 C-Atome enthaltenden ω-Aminocarbonsäuren wie Aminocapronsäure oder deren Lactamen wie z.B. ε-Caprolactam.

Die Umsetzung der aliphatischen Dicarbonsäure mit Polyalkylenpolyamin zu einem Polyamidamin wird in einem molaren Verhältnis von 1:1,0 bis 1:1,2 bei Temperaturen von 120-200°C unter Abdestillieren von Wasser durchgeführt (Schmelzpolymerisation). Üblicherweise wird das Gemisch der genannten Komponenten zunächst auf Temperaturen zwischen 100 und 150°C erwärmt. Die erhaltene dünnflüssige Schmelze wird nach maximal 3 Stunden unter Normaldruck langsam auf maximal 200°C erhitzt, wobei das gebildete Reaktionswasser abdestilliert wird. Das Verfahren kann auch unter Druck durchgeführt werden.

Zur Vermeidung von Verfärbungen des Reaktionsproduktes ist es zweckmäßig, unter Ausschluß von Sauerstoff zu kondensieren. Es wird solange destilliert, bis mindestens 98 % der theoretischen Menge an Wasser entzogen sind, d.h. 1 Mol Wasser pro Mol Carboxylgruppe der Dicarbonsäure.

Nach Beendigung der Schmelzpolykondensation wird durch Zugabe von Wasser auf einen Feststoffgehalt von 20 bis 60%, bevorzugt 40-55% verdünnt, da die Polyamidamine in dieser verdünnten Form leichter gelagert und weiterverarbeitet werden können. Die Viskosität einer 50%igen Lösung soll 200 bis 800 mPas bei 25°C betragen. Das durch Titration nach bekannten Verfahren ermittelte Basenäquivalentgewicht einer 50 %igen Lösung einer für das erfindungsgemäße Verfahren geeigneten Polyamidamins a1) beträgt bevorzugt 300-500 g/eq.

Die oben beschriebenen basischen Polyamidamine können in einzelner oder in beliebiger Mischung untereinander oder in beliebiger Mischung mit Polyaminen gemäß a1) eingesetzt werden. Als Polyamine geeignet sind Verbindungen der Formel (I) 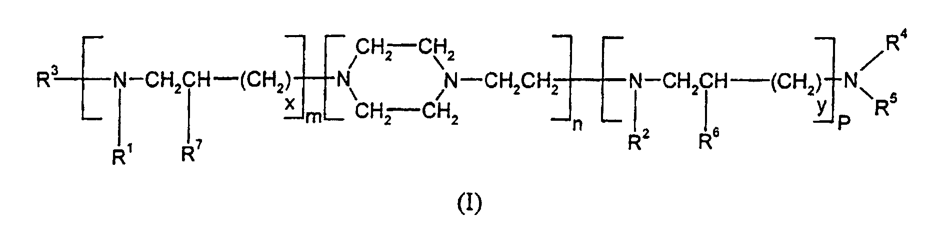 in welcher
- x und y: unabhängig voneinander für 0 oder 1 stehen
- m und p: unabhängig voneinander für 0 bis 5 stehen
- R⁶ und R⁷: unabhängig voneinander für H oder Methyl stehen
- n: für 0 bis 5 steht,
- R¹, R² und R³: unabhängig voneinander für H, Methyl, Ethyl, Hydroxyethyl, Hydroxypropyl oder einen Rest der Formel (II) 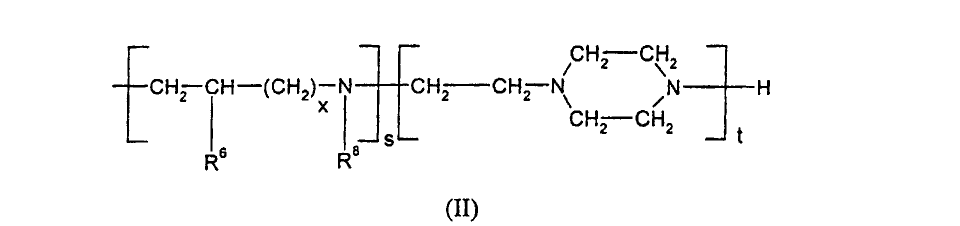
stehen,
worin
- R⁸: für H, Methyl oder Ethyl steht,
- R⁶ und x: die oben genannte Bedeutung haben und
- s und t: unabhängig voneinander für 0 bis 3 stehen,
und
- R⁵ und R⁴: unabhängig voneinander für H, Methyl, Ethyl, Hydroxyethyl, Hydroxypropyl stehen, wobei aber mindestens ein Rest R⁴ oder R⁵ für H steht oder
- R⁴ und R⁵: gemeinsam für eine Gruppe der Formel -CH₂CH₂NHCH₂CH₂- stehen,
und
wobei für den Fall, daß m, n und p für Null stehen, wenigstens einer der Substituenten R³, R⁴, und R⁵ verschieden von Wasserstoff ist.

Beispiele für besonders bevorzugte Polyamine der Formel (I) sind: Diethylentriamin, Triethylentetramin, Tetraethylenpentamin, Pentethylenhexamin, Hexaethylenheptamin, Dipropylentriamin, Dihexamethylentriamin, N-Methyl-bis(3-aminopropyl)amin, Tris(2-aminoethyl)amin, Piperazin, Bis(piperazinyl)ethan, N-(2-aminoethyl)-piperazin, Bisaminoethylpiperazin, Bisaminopropylpiperazin.

Naturgemäß können anstelle der reinen Polyamine auch Polyamingemische eingesetzt werden.

Besonders bevorzugt ist die Verwendung eines Polyamidamins aus Adipinsäure und Diethylentriamin. Die Dosierung des Epichlorhydrins erfolgt in 0,5-5 Stunden bei Temperaturen von 10-25°C, bevorzugt kontinuierlich zur besseren Kontrolle der exothermen Anlagerungsreaktion, gegebenenfalls auch diskontinuierlich oder chargenweise.

Die Weiterreaktion des Epichlorhydrins erfolgt anschließend in Stufe b) innerhalb 4-10 Stunden bei 10-25°C, bis ein Umsatz des Epichlorhydrins von 90 - 99%, bevorzugt 95 - 99 %, erreicht ist. Bei höheren Temperaturen bilden sich verstärkt unerwünschte Nebenprodukte wie DCP und CPD, bei niedrigeren Temperaturen ist die Anlagerungsgeschwindigkeit des Epichlorhydrins an das Polyamidamin zu gering, so daß unwirtschaftlich lange Reaktionszeiten erforderlich sind und der erwünschte Umsatz des Epichlorhydrins nicht erreicht wird.

Als Reaktoren für die Anlagerung des Epichlorhydrins an das Polyamidamin in Stufe a) und b) haben sich Batch-Reaktoren bewährt. Alternativ können zur optimalen Ausnutzung des Epichlorhydrins, zur Vermeidung von Rückvermischung und zur guten Wärmeabfuhr und Temperaturkontrolle auch Kontiapparaturen wie Mehrstufen-Reaktoren und Rohrreaktoren eingesetzt werden.

Das in Stufe b) erhaltene Produkt wird anschließend in Stufe c) zur Abreaktion des restlichen, nicht umgesetzten Epichlorhydrins a2) von max.10%, bevorzugt 1-5% der Einsatzmenge an Epichlorhydrin a2) mit weiterer Lösung a1) umgesetzt, wobei das molare Verhältnis des in Lösung a1) enthaltenen Basen-N zu Epichlorhydrin a2) 1:1 bis 1,2:1 beträgt. Der pH-Wert wird bei dieser Umsetzung über 6, bevorzugt über 7 gehalten, wodurch unerwünschte Nebenreaktionen unterdrückt werden. Durch diese Maßnahme wird die Reaktionszeit verkürzt und der Gehalt an organisch gebundenen Chlor sowie DCP und CPD weiter reduziert. Gegebenenfalls kann die weitere Zugabe von Lösung a1) auch zu Beginn der Aufheizphase der folgenden Stufe d) erfolgen. Günstiger ist jedoch die Zugabe vor der Aufheizphase.

In Stufe d) wird das erhaltene Produkt, gegebenenfalls nach Verdünnen mit Wasser auf 10-25%, auf Temperaturen von 30 bis 70°C, vorzugsweise 50-60°C erwärmt und 2 bis 6 Stunden bei dieser Temperatur gehalten. Hierbei findet die Kondensation beziehungsweise partielle Vernetzung des intermediär gebildeten Reaktionsproduktes statt, die solange durchgeführt wird, bis die Viskosität einer 15 %igen Lösung 30 bis 100 mPas bei 25°C beträgt. Bei niedrigerer Viskosität ist ein Verlust an Naßfestwirkung zu erwarten, bei höherer Viskosität wird das Handling, z.B. Pumpbarkeit und Dosierbarkeit des Produktes erschwert sowie die Lagerfahigkeit verringert, weil eine vorzeitige Verquallung möglich ist, die die Ware unbrauchbar macht.

Nach Erreichen der gewünschten Endviskosität von 30 bis 100 mPas in Stufe d) wird das Produkt in Stufe e) mit Ameisensäure und/oder Schwefelsäure umgesetzt, wobei der pH-Wert auf 2,0 bis 3,0 eingestellt. Dabei wird die weitere Vernetzung unterbrochen und das Produkt gegen einen weiteren Viskositätsanstieg stabilisiert. Möglich ist die Mitverwendung weiterer Säuren wie Salpetersäure, Phosphorsäure, Essigsäure oder auch Acetanhydrid, Propionsäure, Citronensäure, Phosphonobutan-tricarbonsäure, Malonsäure, Weinsäure, Adipinsäure, Glutarsäure usw. Die Verwendung von halogenhaltigen Säuren wie Salzsäure ist weniger bevorzugt. Bevorzugt wird eine Kombination aus Schwefelsäure und Ameisensäure eingesetzt, die als Mischung oder nacheinander in beliebiger Reihenfolge zugesetzt werden können. Insbesondere durch die Verwendung von Ameisensäure wird eine bessere Konstanz der Viskosität und des pH-Wertes erreicht, so daß die Lagerstabilität der Handelsware entscheidend verbessert wird.

Da als Zielgröße der pH-Wert anzusehen ist, ist eine genaue Festlegung der Säuremengen nicht möglich. Üblich sind jedoch z.B. Mengen von 0,3 bis 6 Mol Säure (berechnet auf Protonengehalt) pro kg Festharz. Bevorzugt werden 0,5 bis 3 Mol Säure bez. auf Festharz eingesetzt.

Das Molverhältnis der Ameisensäure zur Schwefelsäure (bezogen auf Protonengehalt) kann auf beliebige Werte zwischen 0,2 und 10 eingestellt werden. Bevorzugt ist ein Molverhältnis von 1,0 bis 2,5.

Der pH-Wert wird durch die Zugabe der obengenannten Säuren auf 2,0 bis 3,0, bevorzugt auf 2,4 bis 2,9 eingestellt. Niedrigere pH-Werte führen nach längerer Lagerzeit zu einem Abbau der Viskosität mit Verlust an Wirksamkeit. Bei pH-Werten über 3,0 ist mit einem Anstieg der Viskosität gegebenenfalls bis zur Verquallung der Ware zu rechnen, so daß eine erwünschte Lagerfähigkeit von 3 bis 6 Monaten nicht sicher erreicht werden kann.

Falls erforderlich, wird die Feststoffkonzentration gleichzeitig mit, vor oder nach der Säurezugabe in Stufe e) mit Wasser auf die gewünschte Endkonzentration von beispielsweise 10 bis 30%, bevorzugt 12 bis 20% eingestellt.

Um den Farbton der erfindungsgemäß hergestellten Polykondensat-Lösung aufzuhellen und die unter ungünstigen Lagerbedingungen eintretende unerwünschte weitere Verfärbung zu vermeiden, ist es vorteilhaft, der Polykondensat-Lösung nach Beendigung von Stufe e) geringe Mengen einer reduzierenden Schwefelverbindung zuzusetzen. Geeignet sind besonders Natriumdisulfit, Natriumhydrogensulfit, Natriumdithionit oder auch Natrium-formaldehydsulfoxylat. In der Regel sind Einsatzmengen von 0,0005 bis 0,05 % bezogen auf die Polykondensat-Lösung ausreichend für eine gute Stabilisierung des Farbtons. Zur Bestimmung des Farbtones ist z.B. die Jodfarbzahl (DIN 53995) geeignet.

Bevorzugt wird der pH-Wert nach einer Reifezeit von 4 bis 48 Stunden nach der ersten Einstellung erneut mit Schwefelsäure und/oder Ameisensäure auf einen pH-Wert von 2,0 bis 3,0, bevorzugt 2,4 bis 2,9 nachgestellt, wodurch eine weitere Verbesserung der Lagerstabilität erreicht werden kann. Insbesondere bei Verwendung von Ameisensäure ist eine Verkürzung dieser Nachreifezeit auf bevorzugt 4 bis 18 Stunden möglich, so daß Lagerkapazität eingespart werden kann und die Ware früher ausgeliefert werden kann, ohne daß die Gefahr von Verquallung und vorzeitiger Vernetzung besteht. Geeignete Säuremengen für diese pH-Nachstellung sind 0,001 bis 0,2 mol Schwefelsäure und/oder Ameisensäure pro kg Festharz (berechnet als Protonengehalt).

Die nach dem erfindungsgemäßen Verfahren hergestellten Produkte haben ein mittleres Molekulargewicht (M_{w}) von mindestens 1000, bevorzugt 2000 bis 1000000 g/mol. Die Polykondensatlösung ist frei von anorganischen Salzen, da keine anorganischen Basen zur Verminderung des organischen Chlorgehaltes eingesetzt werden.

Durch das erfindungsgemäße Verfahren wird das eingesetzte Epichlorhydrin optimal zur Anlagerung an das Polyamidamin mit nur geringen Nebenreaktionen ausgenutzt, so daß unerwünschte Nebenkomponenten wie DCP und CPD nur in untergeordnetem Maße gebildet werden sowie trotz eines relativ niedrigen Einsatzes von Epichlorhydrin eine hohe Naßfestwirkung erreicht wird.

Die erfindungsgemäß hergestellten Polykondensat-Lösungen werden als Papierhilfsmittel, vor allem zur Naßfestausrüstung von Papier, Pappe oder Karton eingesetzt. Die Ausrüstung erfolgt in an sich bekannter Weise, daß man die wäßrige Lösung des Polykondensates zu einer Suspension des Faserrohstoffes gibt, die neben Cellulose oder Holzschliff z.B. Füllstoffe, weitere Papierhilfsmittel wie Retentionsmittel, Leimungsmittel, Fixiermittel, chlorfreie Naßfestmittel wie Polyisocyanate, Farbstoffe, optische Aufheller usw. enthalten kann. Durch Entwässerung wird daraus entweder im Labor auf dem Blattbildner z.B. Rapid-Köthen oder im technischen Maßstab auf der Papiermaschine das Papier gebildet. Die Einsatzmengen richten sich nach dem angestrebten Effekt der Naßverfestigung. In der Regel sind Einsatzmengen von 0,01 bis 2,5 Gew.-%, vorzugsweise 0,1 bis 1,5 Gew.-% Festharz bezogen auf trockenen Faserstoff geeignet.

Bevorzugt erfolgt die Verwendung einer Kombination aus den erfindungsgemäß hergestellten Polykondensaten und chlorfreien hydrophilierten Polyisocyanaten, wie sie z.B. in den deutschen Offenlegungsschriften DE-A 4 211 480, DE-A 4 226 110, DE-A 4 436 058, DE-A 4 446 334, DE-A 1 951 6405 und der deutschen Patentanmeldung Nr. 1 952 0092.6 beschrieben sind, da bei dieser Kombination durch eine Synergie beider Komponenten besonders gute Effekte bei der Füllstoffretention und Naßverfestigung von Papier erzielt werden und besonders günstig eine Ladungskontrolle des Stoffsystems der Papiermaschine durchgeführt werden kann, was besonders bei der Herstellung von Dekor- und Laminatpapier von Vorteil ist.

Darüber hinaus fordern die erfindungsgemäß hergestellten Polykondensat-Lösungen aufgrund ihrer hohen kationischen Ladung die Entwässerung des Stoffgemisches auf der Papiermaschine sowie die Retention von Füllstoffen, Farbstoffen, optischen Aufhellern und sonstigen Papierhilfsmitteln z.B. Reaktiv- und Polymerleimungsmitteln, so daß sich in vielen Fällen eine erhöhte Wirksamkeit dieser Hilfsmittel wie erhöhte Farbtiefe oder verbesserte Leimungswirkung ergibt.

Ferner sind die erfindungsgemäß hergestellten Polykondensat-Lösungen zur Kationisierung beliebiger Füllstoffe und Pigmente geeignet, wie z.B. Kaolin, Clay, Bentonit, Calciumcarbonat, Talkum oder Titandioxid, die in der Papierindustrie Verwendung finden, die aber auch darüber hinaus in anderen Anwendungsbereichen mit Vorteil eingesetzt werden können. Bevorzugt ist die Kationisierung von Titandioxid, das als Weißpigment bei der Herstellung von Dekorpapier Verwendung findet, wo eine hohe kationische Ladung bei gleichzeitig guter Feinverteilung des Weißpigmentes zur Gewinnung einer hohen Opazität gefordert ist. Ebenso sind die erfindungsgemäß hergestellten Polykondensat-Lösungen geeignet zur Kationisierung von Naturprodukten wie Kartoffel-, Mais- oder Weizenstärke, die z.B. enzymatisch oder oxidativ abgebaut sein können, wodurch z.B. die Eigenretention beim Einsatz in der Papiermasse verbessert werden kann, oder auch von Cellulosepulver, das nach Kationisierung z.B. zur Verbesserung der Retention verwendet werden kann.

Möglich ist auch der Einsatz der erfindungsgemäß hergestellten Polykondensat-Lösungen in der Papieroberfläche z.B. zusammen mit Stärke, Leimungsmitteln, Polyisocyanaten und/oder Pigmenten, Farbstoffen und optischen Aufhellern sowie weiteren Zusatzstoffen in der Leimpresse oder Filmpresse sowie auch als Vernetzer im Papierstrich.

Aufgrund ihrer schnellen Vernetzung bei der Trocknung der Papierbahn in der Trockenpartie der Papiermaschine bilden sie eine gute Naßfestigkeit aus bereits ab Papiermaschine, die sich durch Lagern bei Raumtemperatur oder durch eine Behandlung bei erhöhter Temperatur noch steigern läßt. Die erfindungsgemäß hergestellten Polykondensate beeinflussen die Saugfähigkeit des Papieres nicht, so daß sie mit Vorteil bei der Herstellung von Tissue- und Hygienepapieren verwendet werden können. Ebenso bevorzugt ist der Einsatz bei der Herstellung von Dekor- und Laminatpapieren, wo sie neben einer hohen Naßfestwirkung eine gute Retention von Titandioxid und anderen Füllstoffen bewirken und zu einer hohen Opazität beitragen. Ein Vorteil der erfindungsgemäß hergestellten Polykondensate ist ihre leichte Wiederaufschlagbarkeit bei der Verarbeitung von Ausschuß und Recyclingpapier. Zum Aufschließen sind z.B. Natronlauge und/oder Peroxodisulfat besonders geeignet.

Die Polykondensate können weiterhin auch als Textilhilfsmittel zur Behandlung nativer und synthetischer Fasermaterialien Verwendung finden. Eine wichtige Anwendungsform ist der Textildruck, bei dem man z.B. aus einem basischen Polyamidamin, einem erfindungsgemäß hergestellten Polykondensat und gegebenenfalls Homo- oder Copolymerisaten von Vinylverbindungen sowie weiteren Zusätzen eine Druckpaste bereitet, mit dieser Druckpaste auf einem Druckaggregat den textilen Faserstoff bedruckt und anschließend bei erhöhter Temperatur kondensiert.

### Beispiele:

### Beispiel 1

### Herstellung einer basischen Polyamidaminlösung

216,8 g (2,105 mol) Diethylentriamin und 302 g Adipinsäure (2,07 mol) werden zusammengegeben und auf 140°C erwärmt und 1 Stunde bei dieser Temperatur gerührt. Anschließend erhöht man die Temperatur langsam innerhalb 2 Stunden bis auf 180°C und hält eine weitere Stunde bei dieser Temperatur, bis 75 g Wasser abdestilliert sind. Danach wird durch vorsichtige Zugabe von 450 g Wasser eine Polyamidaminlösung erhalten.
Feststoffgehalt 50%
Viskosität 410 mPas (bei 25°C)
Basenäquivalentgewicht der Lösung: 398 g/mol Basen-N

### Herstellung erfindungsgemäßer Polykondensat-Lösungen

### Beispiel 2

212 g der Polyamidaminlösung (0,533 mol) aus Beispiel 1 und 212 g Wasser werden in einen Vierhalskolben mit Rührer, Thermometer Kühler und pH-Elektrode gegeben. Bei 15°C tropft man unter Rühren 41,5 g (0,449 mol) Epichlorhydrin gleichmäßig innerhalb einer Stunde zu und rührt 8 Stunden bei 20°C, bis ein gaschromatographisch ermittelter Umsatz des Epichlorhydrins von 95% erreicht wird. Anschließend gibt man weitere 8,9 g (0,022 mol) der Polyamidaminlösung aus Beispiel 1 zu, wobei der pH-Wert bei >7 gehalten wird, erwärmt auf 55°C und hält ca 4 Stunden bei dieser Temperatur, bis die Viskosität einer 15 %igen Lösung auf 50 - 60 mPas bei 25°C angestiegen ist. Man verdünnt mit 500 g Wasser auf eine Feststoffkonzentration von ca 15,5 %, stoppt die Reaktion durch Zugabe von 6,5 g 48 %iger Schwefelsäure ab und fügt 5 g Ameisensäure (98%ig) zu, wodurch ein pH-Wert von 2,7 eingestellt wird. Der Feststoffgehalt wird anschließend durch Zugabe von ca 50 g Wasser auf 15% eingestellt.
Feststoffgehalt 15,0%
Viskosität 55 mPas bei 25°C
Gehalt an DCP 0,065 %
Gehalt an CPD 0,05 %

### Beispiel 3

398 g der Polyamidaminlösung aus Beispiel 1 (1 mol) und 398 g Wasser werden in einen Vierhalskolben mit Rührer, Thermometer Kühler und pH-Elektrode gegeben. Bei 15°C tropft man unter Rühren 64,75 (0,7 mol) Epichlorhydrin gleichmäßig innerhalb einer Stunde zu und rührt 8 Stunden bei 20°C, bis ein gaschromatographisch ermittelter Umsatz des Epichlorhydrins von 96% erreicht wird. Anschließend gibt man weitere 4,45 g (0,011 mol) der Polyamidaminlösung aus Beispiel 1 zu, wobei der pH-Wert bei >7 gehalten wird, erwärmt auf 55°C und hält ca 4 Stunden bei dieser Temperatur, bis die Viskosität einer 15 %igen Lösung auf 65-70 mPas bei 25°C angestiegen ist

Man verdünnt mit 900 g Wasser auf eine Feststoffkonzentration von ca 15,5 % , stoppt die Reaktion durch Zugabe von 14 g 48 %iger Schwefelsäure ab und fügt 10 g Ameisensäure (98%ig) zu, wodurch ein pH-Wert von 2,7 eingestellt wird. Der Feststoffgehalt wird anschließend durch Zugabe von ca 90 g Wasser auf 15% eingestellt.
Feststoffgehalt 15,0 %
Viskosität 66 mPas bei 25°C
Gehalt an DCP 0,034 %
Gehalt an CPD 0,035 %

### Beispiel 4

### (Konti/4-Kessel-Kaskade)

Für diesen Versuch wird eine 4-Kessel-Kaskade verwendet, die aus zwei Reaktoren mit einem Füllvolumen von je 100 cm³ und einem weiteren Reaktor mit einem Volumen von 2 l besteht. Die ersten 3 Kessel werden geflutet, der 4.Reaktor mit Gaspolster gefahren. Alle Reaktoren werden vorerst bei 20°C gehalten

400 g der Polyamidaminlösung aus Beispiel 1), 400 g Wasser und 92,5 g Epichlorhydrin werden bei 20°C gleichzeitig innerhalb 9 Stunden in den ersten Reaktor der 3-Kessel-Kaskade gepumpt (mittlere Verweilzeit 1 h). Der Überlauf aus dem ersten Reaktor wird in den zweiten Reaktor, danach in den dritten Reaktor gepumpt und im vierten Reaktor gesammelt.

Wenn die Gesamtmenge an Polykondensatlösung in den vierten Reaktor überführt ist, rührt man weitere 2,5 Stunden bei 20°C und hält gleichzeitig den pH-Wert konstant bei 7,0 bis 7,2 durch kontinuierliche Zugabe von ca 16,5 g der Polyamidaminlösung aus Beispiel 1.

Anschließend erwärmt man den vierten Reaktor auf 55°C und rührt weitere ca 4 Stunden, bis die Viskosität, bezogen auf eine 15 %ige Lösung bei 25°C, auf 50-60 mPas angestiegen ist.

Man verdünnt mit 930 g Wasser auf eine Feststoffkonzentration von 15,5%, stoppt die Kondensation durch Zugabe von 12 g Schwefelsäure (48 %ig) und 9 g Ameisensäure, wodurch der pH-Wert auf 2,7 eingestellt wird. Der Feststoffgehalt wird anschließend durch Zugabe von ca 90 g Wasser auf 15% eingestellt.
Feststoffgehalt 15,0 %
Viskosität 60 mPas bei 25°C
Gehalt an DCP 0,073 %
Gehalt an CPD 0,04 %

### Vergleichsbeispiele

### Beispiel 5

200 g (0,502 mol) der Polyamidaminlösung aus Beispiel 1 werden mit 260 g Wasser verdünnt. Danach werden innerhalb 30 Minuten kontinuierlich 39,5 g (0,427 mol) Epichlorhydrin bei 25°C zudosiert. Die erhaltene Lösung wird 3 Stunden bei 28°C gehalten und dann auf 50°C erwärmt. Nach 70 Minuten setzt man 165 g Wasser zu, rührt weitere 30 min bei 50°C und säuert anschließend mit 13 g einer 48 %igen Schwefelsäure auf pH 2,8 an.
Feststoffgehalt 15,0 %
Viskosität 75 mPas bei 25°C
DCP-Gehalt 0,092 %
CPD-Gehalt 0,074 %

Der Gehalt an DCP liegt in diesem Vergleich zwar unter der Grenze der Kennzeichnungspflicht von 0,1 %. Wie aus Tabelle 1 ersichtlich, beträgt die gemittelte Naßbruchlast jedoch nur 80% der Naßfestigkeit, wie sie bei Einsatz der aus Beispiel 2 erhaltenen Polykondensatlösung erhalten werden kann. Wenn hohe Naßfestigkeiten bei gleichzeitig hoher Füllstoffkonzentration wie z.B. im Bereich der Dekorpapiere gefordert werden, ist die Polykondensatlösung deshalb in ihrer Wirksamkeit unbefriedigend.

### Beispiel 6

Beispiel 5 wird wiederholt mit einer erhöhten Einsatzmenge von 44,0 g (0,475 mol) Epichlorhydrin. Die erhaltene Polykondensatlösung hat folgende Analysendaten:
Feststöffgehalt 15,0 %
Viskosität 60 mPas bei 25°C
DCP-Gehalt 0,24 %
CPD-Gehalt 0,12 %

In diesem Beispiel wird zwar eine Naßfestigkeit erreicht, die der in Beispiel 2 erhaltenene Polykondensatlösung fast entspricht. Der DCP-Gehalt ist jedoch so hoch, daß eine Kennzeichnung der Polykondensationslösung erforderlich ist und der Umgang mit ihr nur unter eingeschränkten Sicherheitsbedingungen möglich ist.

### Anwendungsbeispiele

### Beispiel 7

Gebleichter Zellstoff (Kiefern-/Birkensulfat im Gewichtsverhältnis 80:20) wird bei einer Stoffdichte von 2,5% im Holländer auf einen Mahlgrad von 38° Schopper-Riegler gemahlen. Von der erhaltenen Zellstoffsuspension werden 100 g in ein Becherglas gegeben und mit Wasser auf 1000 ml verdünnt.

Anschließend werden die in Tabelle 1 angegebenen Mengen der gemäß den Beispielen hergestellten Polykondensat-Lösungen (Gewichts-% Anwendungsform bezogen auf Zellstoff) dem Faserstoff zugesetzt und 3 min gerührt.

Danach gibt man den Inhalt der Bechergläser auf einen Blattbildner (Rapid-Köthen-Gerät), verdünnt mit 8 l Wasser und bildet Papierblätter mit einem Flächengewicht von ca 80 g/m² (gemäß DIN 54358, Teil 1). Die Papierblätter werden 8 Minuten bei 85°C im Vakuum bei 60 mbar getrocknet und im Trockenschrank noch 10 Minuten bei 110°C nacherhitzt.

Nach Klimatisierung werden aus jedem Papierblatt 5 Prüfstreifen von 1,5 cm Breite ausgeschnitten und 5 Minuten in entionisiertem Wasser gewässert. Danach wurden die nassen Streifen in einer Zugprüfmaschine (DIN 53112, Teil 2) sofort auf ihre Naßbruchlast geprüft. Die erhaltenen Ergebnisse sind in Tabelle 1 zusammengestellt.

| | Naßbruchlast (N) | | | rel. Naßbruchlast | |
|---|---|---|---|---|---|
| Einsatz bez.auf Zellstoff | 2% | 4% | 6% | | |
| Beispiel 2 | 11,6 | 16,7 | 20,7 | | 100 % |
| Beispiel 3 | 10,1 | 14,8 | 18,0 | | 87,6% |
| Beispiel 4 | 11,3 | 16,8 | 21,4 | | 101,0% |
| Beispiel 5 (Vergleich) | | 9,8 | 13,1 | 16,4 | |
| 80,2 % | | | | | |
| Beispiel 6 (Vergleich) | | 11,5 | 16,5 | 19,9 | |
| 97.7 % | | | | | |

## Patentansprüche

1. Verfahren zur Herstellung von Polykondensat-Lösungen mit einem 1,3-Dichlor-2-propanol-Gehalt von < 0,1 %
a) Umsetzung von a1) mindestens einem basischen Polyamidamin und/oder mindestens einem Polyamin in Form einer 10-50 %igen Lösung mit a2) Epichlorhydrin bei 10-25°C, wobei das Molverhältnis Epichlorhydrin zu Basen-N in a1) 0,5 bis 0,85 beträgt;
b) anschließende Weiterreaktion bei 10-25°C bis zu einem Umsatz des Epichlorhydrins von maximal 90 - 99%;
c) anschließende Umsetzung des Produktes aus b) mit weiterer Lösung a1) zur Vervollständigung der Epi-Umsetzung in einem molaren Verhältnis des in Lösung a1) enthaltenen Basen-N zu Epichlorhydrin a2) von 1:1 bis 1,2:1, wobei der pH-Wert über 6 gehalten wird;
d) Erwärmen auf 30-70°C, bis die Viskosität einer 15 %igen Lösung 30-100 mPas bei 25°C beträgt, und
e) Umsetzung des Produktes aus d) mit Ameisensäure und/oder Schwefelsäure, wobei der pH-Wert auf 2,0 bis 3,0 eingestellt wird.

2. Verfahren nach Anspruch 1, **dadurch gekennzeichnet, daß** in Stufe a) das Epichlorhydrin a2) kontinuierlich während eines Zeitraumes von 0,5 bis 5 Stunden zudosiert wird.

3. Verfahren nach Ansprüchen 1 und 2, **dadurch gekennzeichnet, daß** in Stufe b) die Weiterreaktion bis zu einem Umsatz des Epichlorhydrins von 95 bis 99 % durchgeführt wird.

4. Verfahren nach Ansprüchen 1 bis 3, **dadurch gekennzeichnet, daß** Stufen a) bis e) in einem Batch-Reaktor oder in einer Kontiapparatur durchgeführt werden.

5. Verfahren nach Ansprüchen 1 bis 4, **dadurch gekennzeichnet, daß** in Stufe c) der pH-Wert über 7 gehalten wird.

6. Verfahren nach Ansprüchen 1 bis 5, **dadurch gekennzeichnet, daß** in Stufe d) auf 50 bis 60°C erwärmt wird.

7. Verfahren nach Ansprüchen 1 bis 6, **dadurch gekennzeichnet, daß** in Stufe e) Schwefelsäure und Ameisensäure entweder als Mischung oder nacheinander in beliebiger Reihenfolge eingesetzt werden, wobei das Molverhältnis von Ameisensäure und Schwefelsäure, bezogen auf Protonengehalt 1,0 bis 2,5 beträgt.

8. Verfahren nach Ansprüchen 1 bis 7, **dadurch gekennzeichnet, daß** in Stufe e) die Feststoffkonzentration gleichzeitig mit, vor oder nach der Säurezugabe mit Wasser auf die gewünschte Endkonzentration von beispielsweise 10 bis 30%, bevorzugt 12 bis 20% eingestellt wird.

9. Verfahren nach Ansprüchen 1 bis 8, **dadurch gekennzeichnet, daß** nach Beendigung der Stufe e) eine reduziert wirkende Schwefelverbindung in einer Menge von 0,0005 bis 0.5 %, bezogen auf die erhaltene Polykondensationslösung, zugesetzt wird.

## Revendications

1. Procédé pour la préparation de solutions de polycondensats à une teneur en 1,3-dichloro-2-propanol inférieure à 0,1 %.
a) on fait réagir a1) au moins une polyamidamine basique et/ou au moins une polyamine à l'état de solution à une teneur de 10 à 50 % avec a2) l'épichlorhydrine à des températures de 10 à 25°C, avec un rapport molaire de 0,5 à 0,85 entre l'épichlorhydrine et l'azote basique de a1) ;
b) on poursuit la réaction à des températures de 10 à 25°C jusqu'à un taux de conversion de l'épichlorhydrine de 90 à 99 % au maximum ;
c) on fait ensuite réagir le produit obtenu en b) avec des compléments de la solution a1) afin de compléter la conversion de l'épichlorhydrine, à un rapport molaire de 1:1 à 1,2:1 entre l'azote basique de la solution a1) et l'épichlorhydrine a2) en maintenant un pH supérieur à 6;
d) on chauffe à des températures de 30 à 70°C jusqu'à ce que la viscosité d'une solution à 15 % soit de 30 à 100 mPas à 25°C, et
e) on fait réagir le produit obtenu en b) avec l'acide formique et/ou l'acide sulfurique en réglant à un pH de 2,0 à 3,0.

2. Procédé selon la revendication 1, **caractérisé en ce que**, au stade a), on ajoute l'épichlorhydrine a2) en continu en une durée de 0,5 à 5 h.

3. Procédé selon les revendications 1 et 2, **caractérisé en ce que**, au stade b), on poursuit la réaction jusqu'à un taux de conversion de l'épichlorhydrine de 95 à 99 %.

4. Procédé selon les revendications 1 à 3, **caractérisé en ce que** les opérations des stades a) à e) sont exécutées dans un réacteur discontinu ou dans un appareillage continu.

5. Procédé selon les revendications 1 à 4, **caractérisé en ce que**, au stade c), on maintient un pH supérieur à 7.

6. Procédé selon les revendications 1 à 5, **caractérisé en ce que**, au stade b) on chauffe à des températures de 50 à 60°C.

7. Procédé selon les revendications 1 à 6, **caractérisé en ce que**, au stade e) on utilise l'acide sulfurique et l'acide formique soit à l'état de mélange, soit successivement dans un ordre quelconque, avec un rapport molaire de 1,0 à 2,5, rapporté à la teneur en protons, entre l'acide formique et l'acide sulfurique.

8. Procédé selon les revendications 1 à 7, **caractérisé en ce que**, au stade e), en même temps que l'on ajoute l'acide ou avant ou après l'addition d'acide, on règle la concentration en matières solides par addition d'eau à la concentration finale voulue qui est par exemple de 10 à 30 %, de préférence de 12 à 20 %.

9. Procédé selon les revendications 1 à 8, **caractérisé en ce que**, après les opérations du stade e) on ajoute un dérivé sulfuré réducteur en quantité de 0,0005 à 0,5 % par rapport à la solution de polycondensation obtenue.

## Claims

1. Process for the preparation of polycondensate solutions having a 1,3-dichloro-2-propanol content of < 0.1 % **characterized by**
a) reaction of a1) at least one basic polyamidoamine and/or at least one polyamine in the form of a 10-50% strength solution with a2) epichlorohydrin at 10-25°C, the molar ratio of epichlorohydrin to base-N in a1) being from 0.5 to 0.85;
b) subsequent further reaction at 10-25°C to an epichlorohydrin conversion of not more than 90 - 99%;
c) subsequent reaction of the product from b) with further solution a1) for completion of the epichlorohydrin conversion in a molar ratio of the base-N contained in solution a1) to epichlorohydrin a2) of from 1:1 to 1.2:1, the pH being kept above 6;
d) heating to 30-70°C until the viscosity of a 15% strength solution is 30-100 mPas at 25°C, and
e) reaction of the product from d) with formic acid and/or sulphuric acid, the pH being brought to from 2.0 to 3.0.

2. Process according to Claim 1, **characterized in that**, in stage a), the epichlorohydrin a2) is metered in continuously during a period of 0.5 to 5 hours.

3. Process according to Claims 1 and 2, **characterized in that**, in stage b), the further reaction is carried out to an epichlorohydrin conversion of 95 to 99%.

4. Process according to Claims 1 to 3, **characterized in that** stages a) to e) are carried out in a batch reactor or in a continuous apparatus.

5. Process according to Claims 1 to 4, **characterized in that** the pH is kept above 7 in stage c).

6. Process according to Claims 1 to 5, **characterized in that** heating to 50 to 60°C is effected in stage d).

7. Process according to Claims 1 to 6, **characterized in that**, in stage e), sulphuric acid and formic acid are used either as a mixture or in succession in any desired order, the molar ratio of formic acid to sulphuric acid, relative to proton content, being from 1.0 to 2.5.

8. Process according to Claims 1 to 7, **characterized in that**, in stage e), the solids concentration is adjusted with water to the desired final concentration of, for example, 10 to 30%, preferably 12 to 20%, simultaneously with, before or after the acid addition.

9. Process according to Claims 1 to 8, **characterized in that**, after the end of stage e), a sulphur compound having a reduced action is added in an amount of 0.0005 to 0.5%, relative to the polycondensation solution obtained.
